# EUROPÄISCHE PATENTSCHRIFT

(11) **EP 4 311 590 B1**
(45) Veröffentlichungstag und Bekanntmachung des Hinweises auf die Patenterteilung: **23.10.2024**
(21) Anmeldenummer: 23176673.4
(22) Anmeldetag: 01.06.2023
(51) Int. Cl.: B01D 46/00, B01D 46/10, B01D 46/12, B01D 46/52, B01D 46/64

(54) **LUFTFILTER**
AIR FILTER
FILTRE A AIR

(30) Priorität: 29.07.2022 DE 102022119072
(43) Veröffentlichungstag der Anmeldung: 31.01.2024
(73) Patentinhaber: MANN+HUMMEL GmbH, 71636 Ludwigsburg (DE)
(72) Erfinder: DIRNBERGER, Timo, 71636 Ludwigsburg (DE); DOS SANTOS ASCENSAO, Macario Francisco, 71636 Ludwigsburg (DE)
(74) Vertreter: Mann + Hummel Intellectual Property

(56) Entgegenhaltungen:
- DE-A1- 102013 020 653
- US-A1- 2008 216 455
- US-A1- 2017 095 761
- US-A1- 2018 345 196

## Beschreibung

### Technisches Gebiet

Die Erfindung betrifft einen Luftfilter mit einem ersten und einem zweiten Filterelement.

### Stand der Technik

Solche hochabscheidenden Luftfilter sind der Anmelderin bekannt (jedoch nicht notwendigerweise veröffentlicht) und werden beispielsweise zum Filtern von Luft für Fahrzeuginnenräume eingesetzt.

Die verwendeten Luftfilter weisen typischerweise ein Filterelement zum Vorabscheiden von groben Verunreinigungen in der zu filternden Luft und ein hoch abscheidendes Filterelement, beispielsweise einen Schwebstofffilter, zum Abscheiden von Kleinstverunreinigungen auf. Die Filterelemente sind daher üblicherweise derart innerhalb des Luftfilters angeordnet, dass zunächst das Filterelement zum Vorabscheiden und anschließend das Filterelement zum Abscheiden von Kleinstverunreinigungen von der zu filternden Luft durchströmt wird. Beispiele für Luftfilter mit zwei Filterelementen sind in der US2017/095761 und der US2018/345196 offenbart.

Für einen Wechsel der Filterelemente muss der Luftfilter oftmals aufwendig aus dem Luftführungspfad entfernt werden. Hierdurch steigt der Arbeitsaufwand für den Wechsel der Filterelemente.

Um diesem Nachteil zu begegnen, weisen einige Luftfilter eine seitliche Serviceöffnung auf, die den Wechsel der Filterelemente im eingebauten Zustand des Luftfilters ermöglichen. Die Filterelemente können bei diesen Luftfiltern über die seitliche Serviceöffnung quer zu einer Durchströmungsrichtung der Filterelemente ausgewechselt werden. Die herkömmlichen Systeme eignen sich jedoch insbesondere beim Einsatz eines hochabscheidenden Filterelements nur bedingt. Denn die eingesetzten Filterelemente weisen hohe Anforderungen an deren Abdichtung auf, um ein Umströmen des Filterelements zu verhindern. Beim seitlichen Einsetzen eines ausgetauschten Filterelements, insbesondere im Fall eines hochabscheidenden Filterelements, kann ein nötiger Anpressdruck der Filterelemente zwischen den Filterelementen sowie zwischen den Filterelementen und/oder dem Filtergehäuse mit den herkömmlichen Systemen nur unzureichend bewirkt werden. In der Folge können Leckageströme innerhalb des Luftfilters entstehen, die den Bypass von ungefilterter Luft ermöglichen. Ferner können diese Leckageströme ungewünschte, störende Strömungsgeräusche verursachen, die in den Fahrzeuginnenraum dringen.

Es ist daher Aufgabe der Erfindung, einen Luftfilter vorzuschlagen, bei dem der Wechsel der Filterelemente schnell, einfach und unter einem hohen Grad an Abdichtung durchführbar ist.

### Offenbarung der Erfindung

Diese Aufgabe wird durch einen Luftfilter mit den in Anspruch 1 angegebenen Merkmalen gelöst. Die Unteransprüche geben bevorzugte Weiterbildungen wieder.

Erfindungsgemäß ist ein Luftfilter vorgesehen. Der Luftfilter weist ein Filtergehäuse mit einer rohluftseitigen Eintrittsöffnung, zumindest einer reinluftseitigen Austrittsöffnung und einer verschließbaren Wartungsöffnung auf. Die Wartungsöffnung ist vorzugsweise luftdicht verschließbar ausgebildet. Der Luftfilter weist zudem ein erstes Filterelement und ein zweites Filterelement auf. Der Luftfilter kann drei oder mehr Filterelemente aufweisen, wodurch die Filterwirkung verbessert werden kann. Vorzugsweise weist der Luftfilter jedoch genau zwei Filterelemente auf. Die Filterelemente sind zwischen der Eintrittsöffnung und der zumindest einen Austrittsöffnung innerhalb des Filtergehäuses angeordnet. Der Luftfilter weist ferner einen Montagerahmen auf, in dem das erste Filterelement aufgenommen ist. Die Filterelemente sind in zumindest einem Betriebszustand des Luftfilters seriell bzw. aufeinanderfolgend durchströmbar. Mit anderen Worten sind die Filterelemente entlang eines Strömungspfades der zu filternden Luft durch das Filtergehäuse angeordnet. Der Montagerahmen ist entgegen einer Fügerichtung durch die Wartungsöffnung aus dem Filtergehäuse entnehmbar und in der Fügerichtung in das Filtergehäuse einsetzbar. Ferner weist der Montagerahmen einen Spannkeil auf. Darüber hinaus weist das zweite Filterelement einen Keilanschlag auf. Der Spannkeil des Montagerahmens kommt durch Einsetzen des Montagerahmens an dem Keilanschlag des zweiten Filterelements zur Anlage, wodurch das zweite Filterelement in einer Spannrichtung quer zu der Fügerichtung mit dem Filtergehäuse verspannt wird.

Der erfindungsgemäße Luftfilter bewirkt somit den besonders schnellen und einfachen Wechsel der Filterelemente über eine seitliche, insbesondere oberseitige, Wartungsöffnung. Hierdurch kann ein Wechsel der Filterelemente durchgeführt werden, ohne den Luftfilter aus einem Luftführungssystem, beispielsweise einem System zum Belüften eines Fahrzeuginnenraums, zu entfernen. Darüber hinaus kann mit dem erfindungsgemäßen Luftfilter ein Spannen der Filterelemente quer zur Fügerichtung erfolgen. Hierdurch kann ein Anpressen der Filterelemente in Spannrichtung trotz seitlichem Einsetzen der Filterelemente erfolgen. Insbesondere bei Verwendungen eines hochabscheidenden Filterelements, beispielsweise bei der Belüftung von Fahrzeuginnenräumen, kann so ein für das Abdichten notwendiger Anpressdruck der Filterelemente an das Filtergehäuse bewirkt werden. Der erfindungsgemäße Luftfilter weist somit eine besonders hohe Abdichtung zwischen den Filterelementen und dem Filtergehäuse auf und kann Leckageströme wirkungsvoll verhindern.

Unter der Fügerichtung ist eine Montagerichtung der Filterelemente zu verstehen, in der die Filterelemente in das Filtergehäuse eingesetzt werden. Unter der Spannrichtung ist eine Wirkungsrichtung der durch den Spannkeil bewirkten Spannkraft zu verstehen, mit der der Montagerahmen mit dem zweiten Filterelement und dem Filtergehäuse sowie das zweite Filterelement mit dem Filtergehäuse verspannt werden.

Der Spannkeil weist vorzugsweise einen Keilwinkel auf. Der Keilwinkel bemisst sich zwischen zwei Keilseiten. Eine Keilseite ist dabei typischerweise in Fügerichtung ausgerichtet. Die weitere Keilseite kann somit unter dem Keilwinkel schräg zur Fügerichtung verlaufen. Die Keilseiten sind vorzugsweise als die durch die effektiven Kontaktflächen des Spannkeils mit dem Keilanschlag und dem Filtergehäuse gebildeten Abschnitte zu verstehen.

In einer bevorzugten Ausführungsform des Luftfilters kann der Montagerahmen an einer dem Spannkeil abgewandten Seite einen Keilgegenanschlag aufweisen. Vorzugseise sind die Keilgegenanschläge an dem Montagerahmen ausgebildet. Der Keilgegenanschlag kann sich in einem Montagezustand an dem Filtergehäuse abstützen, sodass eine über den Spannkeil auf das zweite Filterelement übertragene Spannkraft in das Filtergehäuse ableitbar ist. Der Keilgegenanschlag fluchtet vorzugsweise mit dem Spannkeil. Hierdurch kann die Spannkraft besonders effektiv abgeleitet werden.

Der Montagerahmen kann zwei oder mehr, insbesondere vier, Keilgegenanschläge aufweisen. Die Keilgegenanschläge können örtlich voneinander beabstandet an dem Montagerahmen angeordnet sein. Hierdurch kann die Kraftableitung in das Filtergehäuse besonders gezielt erfolgen.

Das Filtergehäuse kann eine Stützfläche aufweisen. Die Stützfläche kann zum Abstützen des Montagerahmens ausgebildet sein. Vorzugsweise kontaktiert die Stützfläche die Keilgegenanschläge des Montagerahmens. Hierdurch können die Kraftableitungsstellen an dem Filtergehäuse auf die Keilgegenanschläge des Montagerahmens abgestimmt werden.

In besonders bevorzugter Ausführungsform bildet die Stützfläche des Filtergehäuses in Verbindung mit dem Keilgegenanschlag des Montagerahmens in Fügerichtung ein Schlüssel-Schloss-Prinzip aus.

Bevorzugt ist ferner eine Ausführungsform des Luftfilters, bei der der Spannkeil wenigstens zwei Spannvorsprünge mit einer unterschiedlichen Vorsprungshöhe in Spannrichtung aufweist. Vorzugsweise weist der Spannkeil wenigstens drei Spannvorsprünge auf. Die Spannvorsprünge können an dem Spannkeil befestigt oder ausgebildet sein. Durch die Spannvorsprünge kann die Anlagefläche des Spannkeils an dem Keilanschlag vorgegeben, insbesondere verringert, werden. Hierdurch kann die Reibung zwischen dem Spannkeil und dem Keilanschlag verringert werden, wodurch das Einsetzen des Montagerahmens erleichtert wird. Der Keilwinkel kann in diesem Fall zwischen der Fügerichtung und einer durch die Kontaktstellen der Spannvorsprünge mit dem Keilanschlag verlaufenden Gerade gebildet sein. Die Vorsprungshöhe kann als ein Überstand der Spannvorsprünge über einen gemeinsamen Keilgrundkörper in Spannrichtung verstanden werden.

Vorzugsweise sind die Spannvorsprünge in Fügerichtung voneinander beabstandet.

Bevorzugt ist eine Weiterbildung des Luftfilters, bei der die Vorsprungshöhe der Spannvorsprünge in Fügerichtung abnimmt. Mit anderen Worten ändert sich die Vorsprunghöhe in Fügerichtung von einem Spannvorsprung zu seinem benachbarten Spannvorsprung. Die Vorsprungshöhe eines einzelnen Spannvorsprungs kann über dessen Erstreckung in Fügerichtung gleich sein. Mit anderen Worten kann vorgesehen sein, dass die Vorsprungshöhe an einem Spannvorsprung in Fügerichtung nicht abnimmt. Die Spannvorsprünge können einen gestuften Kontaktbereich an dem Spannkeil ausbilden.

Vorzugsweise weist der Keilanschlag eine komplementäre Kontaktfläche auf. Insbesondere kann der Keilanschlag in Fügerichtung gestufte Abschnitte aufweisen, an denen jeweils ein Spannvorsprung des Spannkeils anliegt. Hierdurch kann ein Schlüssel-Schloss-Prinzip ausgebildet werden, wodurch der Einsatz eines unpassenden bzw. ungeeigneten Filterelements in den Luftfilter verhindert werden kann.

In einer bevorzugte Ausführungsform des Luftfilters weist der Spannkeil zumindest zwei Keilwangen auf. Die Keilwangen sind insbesondere an gegenüberliegenden Seiten des Montagerahmens angeordnet. Vorzugsweise sind die Keilwangen parallel zueinander ausgebildet. Hierdurch kann die Spannkraft möglichst symmetrisch auf das zweite Filterelement bewirkt werden, wodurch ein gleichmäßiges Anpressen des zweiten Filterelements an das Filtergehäuse erfolgen kann.

Bevorzugt ist eine Weiterbildung des Luftfilters, bei der der Keilanschlag zumindest zwei Teilanschläge aufweist. Vorzugsweise sind die zumindest zwei Teilanschläge örtlich voneinander beabstandet an dem zweiten Filterelement angeordnet. Weiter vorzugsweise sind die Teilanschläge an gegenüberliegenden Seiten des zweiten Filterelements angeordnet. Dies kann ein symmetrisches und gleichmäßiges Anpressen des zweiten Filterelements an das Filtergehäuse weiter begünstigen. In besonderer Ausführungsform sind die Teilanschläge an einem Rahmen des zweiten Filterelements ausgebildet. Hierdurch kann die Montage durch Reduzieren der Anzahl von Einzelteilen vereinfacht werden.

In einer bevorzugten Ausführungsform des Luftfilters steht der Spannkeil in der Spannrichtung über den Montagerahmen hervor. Mit anderen Worten steht der Spannkeil in Richtung des zweiten Filterelements hervor. Hierdurch kann ein vorbestimmter Abstand zwischen dem Montagerahmen und dem zweiten Filterelement eingestellt werden. Beispielsweise kann hierdurch ein durchströmbares Volumen zwischen dem ersten und dem zweiten Filterelement konstruktiv vorgesehen werden. Vorzugsweise überlappt der Spannkeil das zweite Filterelement in Spannrichtung. Hierdurch kann der Keilanschlag besonders einfach an dem zweiten Filterelement angeordnet sein.

Alternativ oder zusätzlich kann vorgesehen sein, dass der Keilanschlag entgegen der Spannrichtung über das zweite Filterelement hervorsteht. In diesem Fall kann ein Anliegen des Spannkeils an dem Keilanschlag beispielsweise zwischen dem ersten Filterelement und dem zweiten Filterelement erfolgen. Hierdurch kann eine Belastung in Folge der Spannkraft gleichmäßig auf Spannkeil und Keilanschlag verteilt werden.

In einer bevorzugten Weiterbildung des Luftfilters ist vorgesehen, dass zumindest eine Keilwange des Spannkeils fluiddurchlässig ausgebildet ist. Hierdurch kann ein möglicher Strömungswiderstand durch den Spannkeil vermindert werden.

Bevorzugt ist zudem eine Weiterbildung des Luftfilters, bei der die Keilwangen in der Spannrichtung unterschiedlich weit über den Montagerahmen hervorstehen. Hierdurch kann der Montagerahmen und mithin das darin aufgenommene Filterelement schräg angeordnet werden. Dies ermöglicht einerseits das Vergrößern der effektiven Filterfläche des ersten Filterelements und andererseits das verbesserte Durchströmen des zwischen erstem und zweiten Filterelement gebildeten Volumens. Insbesondere steht die fluiddurchlässige Keilwange weiter über den Montagerahmen über als eine andere Keilwange. Hierdurch kann die Durchströmbarkeit weiter erhöht werden. Weiterhin erleichtert die schräge Anordnung des Filterelements das Vorsehen eines Bypass-Schaltelements, wie später erläutert wird.

Bevorzugt ist ferner eine Ausführungsform des Luftfilters, bei der das erste Filterelement austauschbar an dem Montagerahmen angeordnet ist. Das Filterelement ist vorzugsweise lösbar an dem Montagerahmen aufgenommen. Das erste Filterelement ist besonders bevorzugt in den Montagerahmen eingelegt. Hierdurch kann ein Wechsel des ersten Filterelements besonders einfach und schnell erfolgen. Das Filterelement kann beispielsweise ein plissiertes bzw. gefaltetes Filtermedium aufweisen.

Besonders bevorzugt ist eine Ausführungsform des Luftfilters, bei der der Montagerahmen einen Rahmenabschnitt aufweist, der das erste Filterelement randseitig zumindest teilweise umlaufend umgibt, wobei insbesondere der Spannkeil an dem Rahmenabschnitt ausgebildet ist. Vorzugsweise umgibt der Rahmenabschnitt das Filterelement vollständig umlaufend. Hierdurch kann das Filterelement lose an dem Rahmenabschnitt angeordnet werden, wodurch ein Wechsel besonders einfach erfolgen kann.

Vorzugsweise weist der Montagerahmen zumindest ein Stützgitter auf, das in dem Rahmenabschnitt angeordnet ist. Das Stützgitter kann ein Durchfallen des in dem Montagerahmen aufgenommen Filterelements verhindern. Hierdurch kann das Filterelement verliersicher an dem Montagerahmen angeordnet werden. Weiter vorzugsweise weist der Montagerahmen zwei Stützgitter auf, wobei das Filterelement zwischen den beiden Stützgittern in dem Montagerahmen angeordnet ist. Hierdurch kann ein Reinigen des Filters an dem Montagerahmen ermöglicht werden. Besonders bevorzugt ist zumindest ein Stützgitter von dem Montagerahmen lösbar ausgebildet, wodurch ein Wechsel des Filterelements ermöglicht wird.

Weiter bevorzugt ist eine Ausführungsform des Luftfilters, bei dem das erste Filterelement und das zweite Filterelement in dem Montagezustand parallel zueinander angeordnet sind. Hierdurch kann ein gleichmäßiges Durchströmen der Filterelemente ermöglicht werden. Alternativ kann vorgesehen sein, dass das erste Filterelement und das zweite Filterelement unter einem Winkel zueinander, insbesondere unter einem vorbestimmten Winkel bezüglich der Fügerichtung gedreht, in dem Filtergehäuse angeordnet sind. Hierdurch kann die Anordnung der Filterelemente an deren Anströmung und/oder Abströmung angepasst werden.

In einer bevorzugten Weiterbildung des Luftfilters ist vorgesehen, dass der Montagerahmen in dem Montagezustand unter einem Winkel zu dem zweiten Filterelement in dem Filtergehäuse, insbesondere unter einem vorbestimmten Winkel bezüglicher der Fügerichtung gedreht, angeordnet ist. Hierdurch kann die Position des Montagerahmens flexibel an den zur Verfügung stehenden Bauraum für den Luftfilter angepasst werden.

Bevorzugt ist ferner eine Ausführungsform des Luftfilters, bei dem die Wartungsöffnung durch eine Haube öffenbar und verschließbar ist. Dies ermöglicht den schnellen und einfachen Zugriff auf die Filterelemente ohne Demontage des Luftfilters. Vorzugsweise ist die Haube an dem Montagerahmen angeordnet, insbesondere befestigt. Somit lässt sich der Montagerahmen beim Öffnen der Wartungsöffnung gleichzeitig mit der Haube entnehmen.

Vorzugsweise ist die Wartungsöffnung zur sequenziellen bzw. nacheinander erfolgenden Entnahme der Filterelemente durch die Wartungsöffnung ausgebildet. Hierdurch kann die Wartungsöffnung in ihren Abmessungen geringgehalten werden.

In einer bevorzugten Ausführungsform des Luftfilters ist das zweite Filterelement mittels eines Scharniers innerhalb des Filtergehäuses in eine Befestigungsstellung gedreht und mittels einer Sicherung, insbesondere eines Schnapphakens, in der Befestigungsstellung vorbefestigbar. Vorzugsweise weist das Scharnier voneinander lösbare Scharnierelemente auf. Beispielsweise kann vorgesehen sein, dass ein Teilscharnierelement bei der Entnahme des Filterelements in dem Filtergehäuse verbleibt, während ein anderes Teilscharnierelement mit dem Filterelement entnommen wird. Das Scharnier kann beim Einsetzen des Filterelements sodann durch die Teilscharnierelemente gebildet werden.

Die Befestigungsstellung ist als eine Vorpositionierung des zweiten Filterelements zu verstehen. Durch Einnehmen der Befestigungsstellung kann das zweite Filterelement in eine vorbestimmte Position zur Anlage an dem Filtergehäuse kommen. Mit Einsetzen des Spannkeils kann ein Anpressen sodann besonders kontrolliert erfolgen. Ferner wird durch das Einnehmen der Befestigungsstellung der Einsetzraum für den Montagerahmen vergrößert, sodass das Einsetzen leichter erfolgen kann.

Besonders bevorzugt ist eine Ausführungsform des Luftfilters, bei der der Luftfilter ein schaltbares Bypass-Schaltelement aufweist, das stromabwärts eines in einer Durchströmungsrichtung stromaufwärts angeordneten Filterelements vorliegt, wobei das Bypass-Schaltelement dazu ausgebildet ist, in einem ersten Betriebszustand eine serielle Durchströmung beider Filterelemente zu bewirken und in einem zweiten Betriebszustand eine zumindest teilweise Umgehung des stromabwärts angeordneten Filterelements zu bewirken.

Hierdurch kann der Einsatz der Filterelemente bedarfsabhängig gesteuert werden. Beispielsweise kann in einem Betriebszustand vorgesehen sein, dass beide Filterelemente seriell bzw. aufeinander folgend durchströmt werden, falls die Partikelkonzentration in der zu filternden Luft hoch ist. Bei niedriger Partikelkonzentration kann in einem anderen Betriebszustand vorgesehen sein, dass ein Filterelement umgangen wird. Hierdurch kann der durch dieses Filterelement bedingte Druckverlust verhindert und der Energieeinsatz reduziert werden. Ferner können strömungsbedingte Störgeräusche vermindert werden. Durch eine bedarfsgerechte Zu- bzw. Abschaltung der Filterelemente kann entweder die Standzeit der Filterelemente erhöht werden, oder die Filterelemente können kleiner dimensioniert werden, was einen positiven Einfluss auf den Bauraumbedarf hat.

In einer bevorzugten Weiterbildung des Luftfilters stellt die zumindest eine fluiddurchlässig ausgebildete Keilwange des Montagerahmens einen Bypass-Strömungspfad zwischen den beiden Filterelementen bereit. Dies ermöglicht die besonders druckverlustarme Umgehung des Filterelements.

Ferner ist eine Weiterbildung des Luftfilters bevorzugt, bei der der Luftfilter eine weitere Austrittsöffnung aufweist, wobei die weitere Austrittsöffnung an der Abströmseite des ersten Filterelements angeordnet ist, und wobei die weitere Austrittsöffnung durch das Bypass-Schaltelement öffenbar und schließbar ist. Hierdurch wird eine besonders effektive Umgehung des Filterelements ermöglicht.

In einer besonders bevorzugten Weiterbildung des Luftfilters, weist der Luftfilter eine reinluftseitige Strömungsführung auf, die die Austrittsöffnungen abströmseitig fluidisch verbindet. Die Strömungsführung weist vorzugsweise einen einzigen Luftaustritt auf. Hierdurch kann die Anbindung des Luftfilters an eine bestehende Luftführung besonders einfach erfolgen.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können. In der Zeichnung zeigt:
- Fig. 1: eine erste Ausführungsform eines erfindungsgemäßen Luftfilters in einem unmontierten Zustand mit einem ersten Filterelement, einem zweiten Filterelement und einem Montagerahmen, der einen Spannkeil mit Spannvorsprüngen aufweist.
- Fig. 2: den Luftfilter aus Fig. 1 in einem montierten Zustand, bei dem die Spannvorsprünge des Spannkeils an einem Keilanschlag anliegen.
- Fig. 3: den Luftfilter aus Fig. 2 in dem montierten Zustand in einer geschnittenen Draufsicht.
- Fig. 4: den Luftfilter aus Fig. 1 in einem Zustand mit teilweise eingesetztem zweiten Filterelement.
- Fig. 5: eine zweite Ausführungsform eines Luftfilters in einem unmontierten Zustand mit einem Spannkeil, der unterschiedliche Vorsprunghöhen aufweist, und einem komplementär zum Spannkeil ausgebildeten Keilanschlag.
- Fig. 6: eine dritte Ausführungsform eines Luftfilters mit einem schräg angeordneten Montagerahmen, einem Bypass-Schaltelement und einer fluiddurchlässig ausgebildeten Keilwange des Spannkeils.
- Fig. 7: eine vierte Ausführungsform eines Luftfilters mit parallel angeordneten Filterelementen und einem Bypass-Schaltelement in einer geschnittenen Draufsicht.

### Ausführungsformen der Erfindung

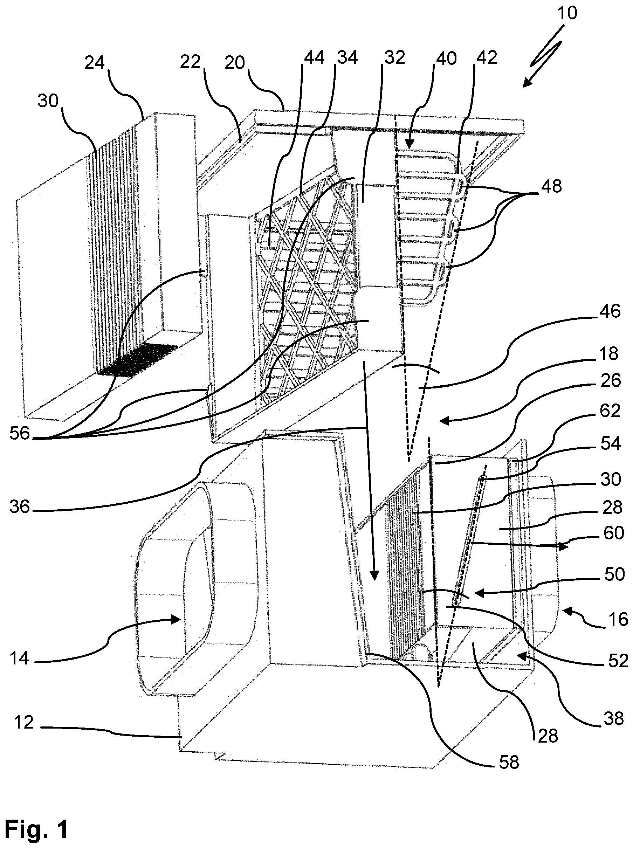

**Figur 1** zeigt einen Luftfilter **10** in einem unmontierten Zustand. Der Luftfilter 10 weist ein Filtergehäuse **12** mit einer rohluftseitigen Eintrittsöffnung **14** und einer reinluftseitigen Austrittsöffnung **16** auf. Ferner weist das Filtergehäuse 12 eine Wartungsöffnung **18** auf, die durch eine Haube **20** verschlossen werden kann. Die Haube 20 kann zu diesem Zweck ein Dichtmittel - hier einen umlaufenden Dichtungsring **22** - aufweisen. Das Dichtmittel kann alternativ oder zusätzlich an dem Filtergehäuse 12 angeordnet sein.

Der Luftfilter 10 weist ein erstes Filterelement **24** und ein zweites Filterelement **26** auf. Das erste Filterelement 24 und/oder das zweite Filterelement 26 kann/können jeweils einen Rahmen **28** aufweisen. Gemäß der Abbildung in Fig. 1 ist ein möglicher Rahmen 28 an dem ersten Filterelement 24 nicht näher dargestellt. Die Filterelemente 24, 26 weisen gemäß der gezeigten Abbildung jeweils ein gefaltetes Filtermedium **30** auf. Aus Gründen der besseren Darstellbarkeit ist lediglich ein Teilbereich der Filtermedien 30 gefaltet dargestellt. Darüber hinaus sind weitere Arten von Filtermedien vorsehbar.

Der Luftfilter 10 weist ferner einen Montagerahmen **32** auf. Der Montagerahmen 32 ist gemäß der gezeigten Abbildung an der Haube 20, insbesondere unlösbar, befestigt. Vorzugsweise ist die Haube 20 an dem Montagerahmen 32 ausgebildet. Mit anderen Worten kann der Montagerahmen 32 gemeinsam mit der Haube 20 bewegt werden. Der Montagerahmen 32 kann U-förmig ausgebildet sein, wobei die offene Seite des Montagerahmens 32 durch die Haube 20 geschlossen sein kann.

Der Montagerahmen 32 ist zur Aufnahme des ersten Filterelements 24 ausgebildet. Hierfür kann der Montagerahmen 32 ein Stützgitter **34** aufweisen. Das Stützgitter 34 ist vorzugsweise abströmseitig an dem ersten Filterelement 24 angeordnet und verhindert ein Durchfallen des ersten Filterelements 24 durch den Montagerahmen 32. Der Montagerahmen 32 stützt das erste Filterelement 24 somit an dessen Umfang sowie an dessen Filterfläche. Das Stützgitter 34 weist vorzugsweise eine gegenüber dem ersten Filterelement 24 deutlich höhere Luftdurchlässigkeit auf. Das Stützgitter 34 ist besonders bevorzugt an dem Montagerahmen 32 lösbar angeordnet. Das Stützgitter 34 kann aber auch mit dem Montagerahmen 32 einteilig sein bzw. an diesen angeformt.

In speziellerer Ausführung kann vorgesehen sein, dass ein weiteres Stützgitter 34 anströmseitig an dem im Montagerahmen 32 aufgenommenen ersten Filterelement 24 angeordnet werden kann. Mit anderen Worten kann das erste Filterelement 24 zwischen zwei Stützgittern 34 in dem Montagerahmen 32 aufgenommen angeordnet sein. Hierdurch kann ein Herausfallen des ersten Filterelements 24 selbst bei intensiven Reinigungsmaßnahmen zuverlässig verhindert werden.

Der Montagerahmen 32 ist zusammen mit dem darin angeordneten ersten Filterelement 24 durch die Wartungsöffnung 18 aus dem Filtergehäuse 12 entnehmbar sowie in einer Fügerichtung 36 in das Filtergehäuse 12 einsetzbar. Aus Gründen der besseren Erläuterung weist das Filtergehäuse 12 einen teilgeschnitten Bereich **38** auf, der eine Einsicht in das Filtergehäuse 12 ermöglicht, tatsächlich jedoch verschlossen ist.

Der Montagerahmen 32 weist einen Spannkeil **40** auf. Der Spannkeil 40 kann wie dargestellt eine erste Keilwange **42** und eine zweite Keilwange **44** aufweisen. Die zweite Keilwange 44 ist in der Darstellung teilweise durch den Montagerahmen 32 verdeckt. In der Darstellung gemäß Fig. 1 stehen der Spannkeil 40, bzw. steht jede Keilwange 42, 44 quer, insbesondere rechtwinklig, zu der Fügerichtung 36 über den Montagerahmen 32 hervor.

Der Spannkeil 40 kann bzw. die Keilwangen 42, 44 können an dem Montagerahmen 32 unlösbar angeordnet oder ausgebildet sein. Der Spannkeil 40 kann einen Keilwinkel **46** aufweisen, der eine sich in Fügerichtung 36 verjüngende Keilhöhe bewirkt. Mit anderen Worten öffnet sich der Spannkeil 40 in diesem Fall entgegen der Fügerichtung 36. In besonderer Ausführungsform kann vorgesehen sein, dass die Keilwangen 42, 44 jeweils einen unterschiedlichen Keilwinkel 46 aufweisen. Hierdurch kann die Montagesicherheit erhöht werden.

Der Spannkeil 40 kann Spannvorsprünge **48** aufweisen. Gemäß der Darstellung weist die erste Keilwange 42 drei Spannvorsprünge 48 auf. Die Spannvorsprünge 48 können die Kontaktfläche des Spannkeils 48 mit einem Keilanschlag **50** ausbilden. Mit anderen Worten kann vorgesehen sein, dass der Spannkeil 40 über die Spannvorsprünge 48 an dem Keilanschlag 50 anliegt.

Das zweite Filterelement 26 weist den Keilanschlag 50 auf. Der Keilanschlag 50 kann an dem zweiten Filterelement 26 angeordnet oder ausgebildet sein. Vorzugsweise ist der Keilanschlag 50 an dem Rahmen 28 des zweiten Filterelements 26 angeordnet oder ausgebildet. Der Keilanschlag 50 weist vorzugsweise einen Keilanschlagwinkel **52** auf, der dem Keilwinkel 46 ähnlich, insbesondere identisch, ist.

Der Keilanschlag 50 weist weiter vorzugsweise eine zur Anzahl der Keilwangen 42, 44 identische Anzahl an Teilanschlägen **54** auf. Die Teilanschläge 54 können örtlich beabstandet an dem zweiten Filterelement 26 angeordnet oder ausgebildet sein. Besonders bevorzugt sind die Teilanschläge 54 an gegenüberliegenden Seiten des zweiten Filterelements 26 angeordnet oder ausgebildet. Gemäß der Darstellung in Fig. 1 ist lediglich ein Teilanschlag 54 sichtbar.

Der Montagerahmen 32 kann an der dem Spannkeil 40 abgewandten Seite Keilgegenanschläge **56** aufweisen. Die Keilgegenanschläge 56 können zur Anlage an einem Stützbereich **58** des Filtergehäuses 12 ausgebildet sein.

Bei Einsetzen des Montagerahmens 32 in das Filtergehäuse 12 entlang der Fügerichtung 36 kommt zunächst der Spannkeil 40 an dem Keilanschlag 50 zur Anlage. Ferner können die Keilgegenanschläge 56 an dem gehäuseseitigen Stützbereich 58 zur Anlage kommen. Mit zunehmendem Einsetzen des Montagerahmens 32 stützt sich dieser an dem Filtergehäuse 12 und bewirkt über den mit dem Keilanschlag 50 in Kontakt befindlichen Spannkeil 40 eine Bewegung des zweiten Filterelements 26 in einer Spannrichtung **60.** Die Spannrichtung 60 wird quer, insbesondere orthogonal, zur Fügerichtung 36 bewirkt. In der Folge kommt das zweite Filterelement 26 auf einer zum Spannkeil 40 abgewandten Seite zur luftdichten Anlage an dem Filtergehäuse 12. Das zweite Filterelement 26 weist vorzugsweise eine Filterelementdichtung **62** auf, die zwischen dem zweiten Filterelement 26 und dem Filtergehäuse 12 angeordnet ist. Die Filterelementdichtung 62 ist gemäß der Darstellung an dem zweiten Filterelement 26 verliersicher angeordnet oder befestigt. Ferner kann vorgesehen sein, dass die Filterelementdichtung 62 an dem Filtergehäuse 12 verliersicher angeordnet oder befestigt ist.

Mit anderen Worten ist konstruktiv vorgesehen, dass eine Raumforderung des Montagerahmens 32 in Fügerichtung 60 größer ist als der zwischen dem Stützbereich 58 und dem Keilanschlag 50 vor dem Einsetzen des Montagerahmens 32 zur Verfügung stehenden Raum. Durch Einsetzen des Montagerahmens 32 wird das zweite Filterelement 26 unter Anpressen an das Filtergehäuse 12 in der Spannrichtung 60 durch den Montagerahmen 32 und den Spannkeil 40 verdrängt. Die Filterelementdichtung 62 kann dabei zusammengedrückt werden.

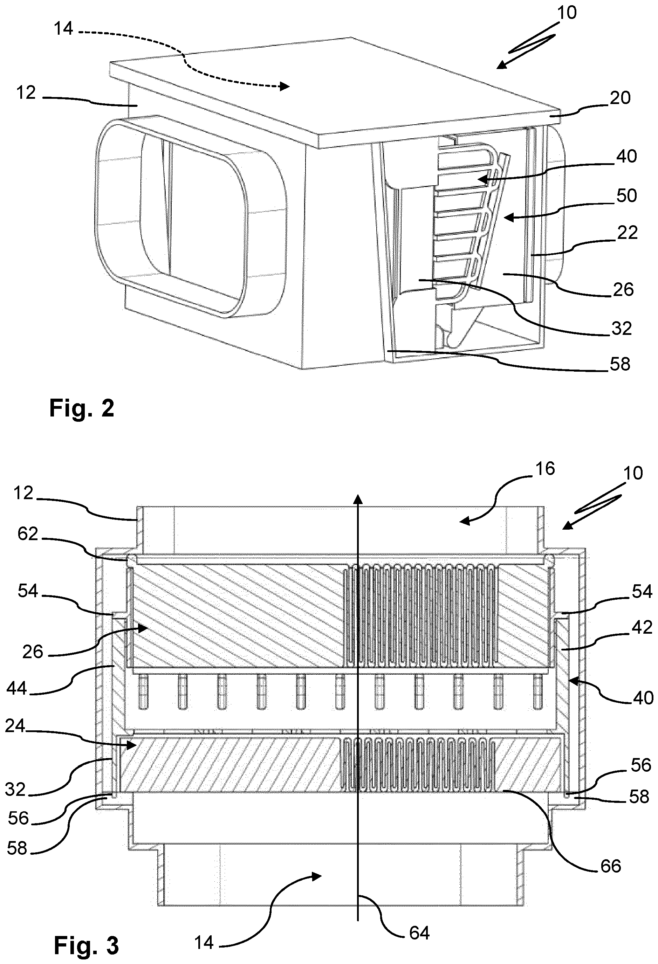

**Figur 2** zeigt den Luftfilter 10 in einem montierten bzw. geschlossenen Zustand. Die Haube 20 verschließt die Wartungsöffnung 14, insbesondere luftdicht. Die Wartungsöffnung 14 wird wie dargestellt durch die Haube 20 verdeckt und ist daher mit einem gestrichelten Pfeil versehen.

Gemäß der Darstellung in Fig. 2 befindet sich der Montagerahmen 32 innerhalb des Filtergehäuses 12. Der Spannkeil 40 liegt an dem Keilanschlag 50 an und verspannt den Montagerahmen 32 einerseits mit dem Stützbereich 58 und andererseits das zweite Filterelement 26 mit dem Filtergehäuse 12.

**Figur 3** zeigt den Luftfilter 10 im montierten Zustand in einer geschnittenen Draufsicht. Das erste Filterelement 24 und das zweite Filterelement 26 sind fluidisch in Reihe geschaltet. Mit anderen Worten ist das zweite Filterelement 26 dem ersten Filterelement 24 entlang eines beispielhaften Strömungspfades **64,** der von der Eintrittsöffnung 14 zur Austrittsöffnung 16 verläuft, nachgeschaltet. Zu filternde Luft, die über die Eintrittsöffnung 14 in das Filtergehäuse 12 gelangen kann, wird zunächst durch das erste Filterelement 24 und anschließend durch das zweite Filterelement 26 gefiltert, bevor es das Filtergehäuse 12 durch die Austrittsöffnung 16 verlassen kann.

Die Darstellung zeigt die beiden Keilwangen 42, 44 des Spannkeils 40, die an den beiden Teilanschlägen 54 anliegen. Die Teilanschläge 54 sind gemäß der Darstellung an gegenüberliegenden Seiten des zweiten Filterelements 26 ausgebildet. Zudem sind die Keilwangen 42, 44 gemäß der Ausführung in Fig. 3 an gegenüberliegenden Seiten des Montagerahmens 32 ausgebildet.

Das Filtergehäuse 12 weist keinen teilgeschnittenen Bereich 38 (siehe Fig. 1) auf. Mit anderen Worten weist das Filtergehäuse 12 in der gezeigten Ausführungsform als Luftdurchtritt lediglich die Eintrittsöffnung 14 und die Austrittsöffnung 16 auf.

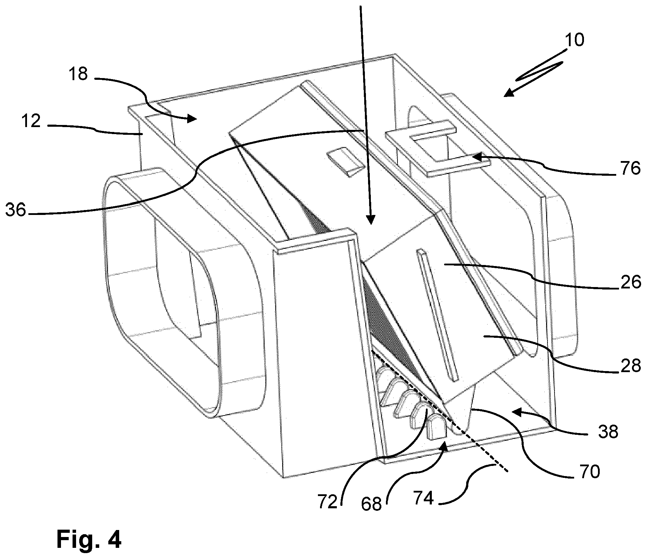

Das erste Filterelement 24 kann mit einer Anströmseite **66** die Eintrittsöffnung 14, insbesondere vollständig, bedecken. Um ein Umströmen des ersten Filterelements 24 effektiv zu verhindern, kann vorgesehen sein, dass der Montagerahmen 32 an dem Stützbereich 58 anliegt. Insbesondere kann der Stützbereich 58 und/oder die Keilgegenanschläge 56 ein Dichtmittel aufweisen. Alternativ oder zusätzlich kann vorgesehen sein, dass der Montagerahmen 32 an der Haube 20 (siehe Fig. 1, 2) ein Dichtmittel aufweist, das in einem eingesetzten Zustand des Montagerahmens 32 an dem Filtergehäuse 12 anliegt. **Figur 4** zeigt den Luftfilter 10 in einem unmontierten Zustand ohne den Montagerahmen 32 (siehe Fig. 1-3) und die Haube 20 (siehe Fig. 1-3). Zur besseren Erläuterung der Darstellung weist die Abbildung den teilgeschnitten Bereich 38 auf.

Der Luftfilter 10 kann sich gemäß der Darstellung in Fig. 4 in einem Wartungs- und/oder Montagezustand befinden. Dabei kann vorgesehen sein, dass das zweite Filterelement 26 vor dem ersten Filterelement 24 (siehe Fig. 1-3) bzw. dem Montagerahmen 32 in das Filtergehäuse 12 eingesetzt wird. Durch eine derartige sequenzielle Montage der Filterelemente 24, 26 kann die Wartungsöffnung 18 gegenüber einer gleichzeitigen Montage in ihren Abmessungen geringgehalten sein.

Zu diesem Zweck kann vorgesehen sein, dass das zweite Filterelement 26 mittels eines Scharniers **68** in eine Befestigungsstellung gedreht werden kann. Das Scharnier 68 kann figurgemäß einen am Rahmen 28 des zweiten Filterelements 26 angeordneten oder ausgebildeten Hebel **70** und einen am Filtergehäuse 12 angeordneten oder ausgebildeten Drehanschlag **72** aufweisen, die in Verbindung eine Drehachse **74** für das zweite Filterelement 26 bilden. Der Drehanschlag 72 kann wie gezeigt in Form einer Vielzahl von rippenartigen Vorsprüngen ausgebildet sein.

Nach Einsetzen des zweiten Filterelements 26 in Fügerichtung 36 in das Filtergehäuse 12, kann das zweite Filterelement 26 sodann um die Drehachse 74 in die Befestigungsstellung gedreht werden. Mit anderen Worten kann das Filterelement 26 nach dem Einsetzen aus dem Einsetzbereich des Montagerahmens 32 gedreht werden. Anschließend kann das Filterelement 26 mittels einer Sicherung **76** - hier einem Schnapphaken - in der Befestigungsstellung gehalten werden. Dies kann ein Zurückdrehen des zweiten Filterelements 26 in den Einsetzbereich des Montagerahmens 32 (siehe Fig. 1) effektiv verhindern.

In der Befestigungsstellung kann ein Vorspannen des zweiten Filterelements 26 mit dem Filtergehäuse 12 erfolgen. Das Vorspannen begünstigt das umlaufende Anliegen des zweiten Filterelements 26 an dem Filtergehäuse 12, sodass nach dem Einsetzen des ersten Filterelements 24 ein besonders gutes Verspannen ermöglicht wird.

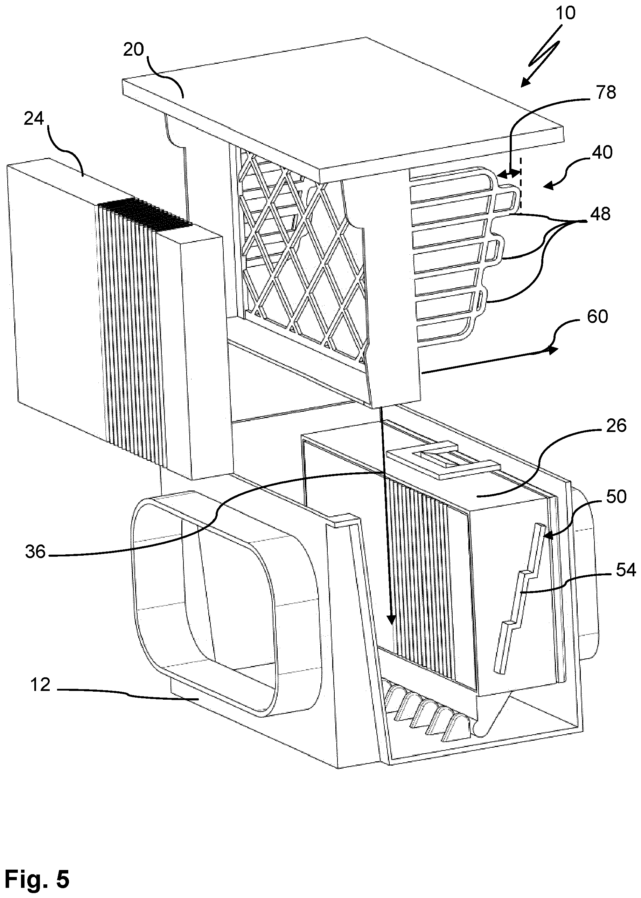

**Figur 5** zeigt eine zweite Ausführungsform eines Luftfilters 10. Der dargestellte Luftfilter 10 unterscheidet sich von der in Fig. 1-4 gezeigten Ausführungsform durch eine veränderte Ausbildung des Spannkeils 40 und des Keilanschlags 50.

Der Spannkeil 40 weist gemäß dieser Ausführungsform mehrere - hier drei - Spannvorsprünge 48 auf. Die Spannvorsprünge 48 weisen in der Spannrichtung 60 eine Vorsprunghöhe 78 auf, wobei die Vorsprunghöhe 78 von benachbarten Spannvorsprüngen 48 in der Fügerichtung 36 abnimmt. Mit anderen Worten ist die Kontaktfläche des Spannkeils 40 gestuft ausgebildet.

Die Teilanschläge 54 des Keilanschlags 50 können, wie dargestellt, ebenfalls gestuft ausgebildet sein. Beim Einsetzen des Montagerahmens 32 in das Filtergehäuse 12 entlang der Fügerichtung 36 kommen die Spannvorsprünge 48 jeweils an dem komplementär zu diesem Spannvorsprung 48 ausgebildeten Stufenabschnitt der Kontaktfläche 54 zum Anliegen. Hierdurch kann bewirkt werden, dass gemäß dem Schlüssel-Schloss-Prinzip lediglich aufeinander abgestimmte Filterelemente 24, 26 zusammen in das Filtergehäuse 12 eingesetzt werden können. Montagefehler können verhindert werden.

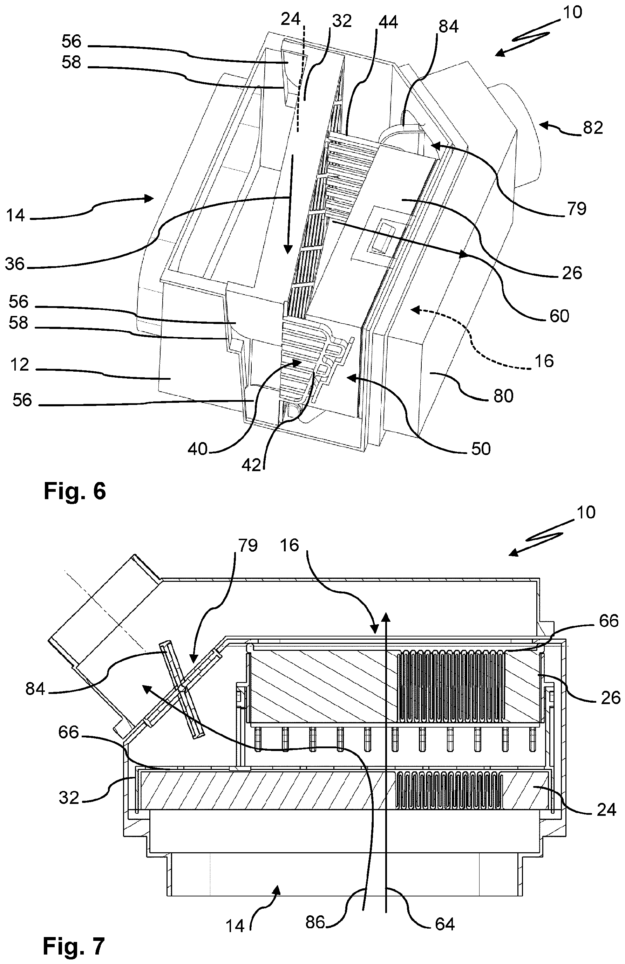

**Figur 6** zeigt eine dritte Ausführungsform des Luftfilters 10 in einem montierten Zustand des Montagerahmens 32 ohne die Haube 20 (siehe Fig. 1, 2, 5). Der dargestellte Luftfilter 10 weist in dem Filtergehäuse 12 eine Eintrittsöffnung 14, eine Austrittsöffnung 16 sowie eine weitere Austrittsöffnung **79** auf. Die Austrittsöffnung 16 ist gemäß der Abbildung in Fig. 6 durch eine Luftsammelleiste **80** verdeckt. Die Luftsammelleiste 80 kann die Austrittsöffnung 16 und die weitere Austrittsöffnung 79 fluidisch verbinden. Vorzugsweise weist die Luftsammelleiste 80 einen einzelnen Luftaustritt **82** auf. Hierdurch kann die Integration des Luftfilters 10 in einen Luftführungskanal (nicht gezeigt) vereinfacht werden.

Die weitere Austrittsöffnung 79 ist vorzugsweise stromabwärts des ersten Filterelements 24 und stromaufwärts des zweiten Filterelements 26 an dem Filtergehäuse 12 ausgebildet. Mit anderen Worten kann über die weitere Austrittsöffnung 79 das zweite Filterelement 26 umströmt werden. Die weitere Austrittsöffnung 79 weist vorzugsweise ein schaltbares Bypass-Schaltelement **84** - hier in Form einer Bypass-Steuerklappe - auf. Hierdurch kann die weitere Austrittsöffnung 79 kontrolliert geöffnet und/oder geschlossen werden. Dies ermöglicht im Bedarfsfall das gesteuerte Umströmen des zweiten Filterelements 26.

Der Spannkeil 40 weist die erste Keilwange 42 und die zweite Keilwange 44 auf. Die Keilwangen 42, 44 liegen an korrespondierenden Kontaktflächen 54 des Keilanschlags 50 an. Die Keilwange 44 ist in der gezeigten Ausführungsform fluiddurchlässig, hier luftdurchlässig, ausgebildet, um das Umströmen des zweiten Filterelements 26 bei geöffnetem Bypass-Schaltelement 84 zu verbessern.

Die Keilwange 44 steht gemäß einem weiteren unabhängig zu betrachtenden Merkmal in der Spannrichtung 60 weiter über den Montagerahmen 32 hervor als die erste Keilwange 42. Dies ermöglicht die um die Fügerichtung 36 gedrehte Anordnung des ersten Filterelements 24 in dem Filtergehäuse 12. Mit anderen Worten sind das erste Filterelement 24 und das zweite Filterelement 26 schräg zueinander angeordnet. Hierdurch kann die Abmessung des Montagerahmens 32 und mithin des ersten Filterelements 24 vergrößert werden. Zudem kann der Strömungsquerschnitt zwischen dem ersten Filterelement 24 und dem zweiten Filterelement 26 vergrößert werden, was die Durchströmung des Filtergehäuses 12 vereinfacht.

Gemäß der in Fig. 6 gezeigten Ausführungsform kann der Stützbereich 58 an dem Filtergehäuse 12 gestuft ausgebildet sein. Mit anderen Worten kann in analoger Weise zu dem Spannkeil 40 und dem Keilanschlag 50 ein Schlüssel-Schloss-Prinzip an dem Stützbereich 58 vorgesehen sein. Der Montagerahmen 32 kann an den Stützbereich 58 angepasste Keilgegenanschläge 56 vorsehen. Hierdurch kann die Montagesicherheit noch weiter erhöht werden.

**Figur 7** zeigt eine vierte Ausführungsform eines Luftfilters 10 in einer geschnittenen Draufsicht. Das erste Filterelement 24, bzw. der Montagerahmen 32 ist parallel zu dem zweiten Filterelement 26 innerhalb des Filtergehäuses 12 verspannt angeordnet.

Das Filtergehäuse 12 weist eine Eintrittsöffnung 14 eine Austrittsöffnung 16 und eine weitere Austrittsöffnung 79 auf. Die Austrittsöffnung 16 ist an der Abströmseite 66 des zweiten Filterelements 26 in dem Filtergehäuse 12 ausgebildet. Die weitere Austrittsöffnung 79 ist - fluidisch mit der Abströmseite 66 des ersten Filterelements 24 verbunden - zwischen dem ersten und dem zweiten Filterelement 24, 26 an dem Filtergehäuse 12 ausgebildet.

Die weitere Austrittsöffnung 79 weist das Bypass-Schaltelement 84 auf.

Bei geschlossenem Bypass-Schaltelement 84 erfolgt die Durchströmung des Luftfilters 10 gemäß dem beispielhaft dargestellten Strömungspfad 64. Entlang dem Strömungspfad 64 wird in das Luftfiltergehäuse 12 eintretende Luft mittels beider Filterelemente 24, 26 gefiltert. Hierdurch kann Luft mit einer hohen Partikelkonzentration effektiv gefiltert werden.

Bei geringer Partikelkonzentration in der zu filternden Luft kann vorgesehen sein, dass das Bypass-Schaltelement 84 geöffnet und Luft entlang des beispielhaft dargestellten Strömungspfades **86** durch das Luftfiltergehäuse 12 geführt wird. Bei geöffnetem Bypass-Schaltelement 84 kann Luft, die durch das erste Filterelement 24 gefiltert wurde, das zweite Filterelement 26 durch die weitere Austrittsöffnung 79 umströmen. Hierdurch weist der Luftfilter 10 einen geringeren Druckverlust auf, was sich günstig auf den Energieeinsatz auswirkt.

### Bezugszeichenliste

Flüssigkeitsfilter **10**
Filtergehäuse **12**
Rohluftseitige Eintrittsöffnung **14**
Reinluftseitige Austrittsöffnung **16**
Wartungsöffnung **18**
Haube **20**
Dichtungsring **22**
Erstes Filterelement **24**
Zweites Filterelement **26**
Rahmen **28**
Filtermedium **30**
Montagerahmen **32**
Stützgitter **34**
Fügerichtung **36**
Teilgeschnittener Bereich **38**
Spannkeil **40**
Erste Keilwange **42**
Zweite Keilwange **44**
Keilwinkel **46**
Spannvorsprung **48**
Keilanschlag **50**
Keilanschlagwinkel **52**
Teilanschlag **54**
Keilgegenanschlag **56**
Stützbereich **58**
Spannrichtung **60**
Filterelementdichtung **62**
Strömungspfad **64**
Anströmseite **66**
Scharnier **68**
Hebel **70**
Drehanschlag **72**
Drehachse **74**
Sicherung **76**
Vorsprunghöhe **78**
Weitere Austrittsöffnung **79**
Luftsammelleiste **80**
Luftaustritt **82**
Bypass-Schaltelement **84**
Strömungspfad **86**

## Patentansprüche

1. Luftfilter (10) aufweisend
- ein Filtergehäuse (12) mit einer rohluftseitigen Eintrittsöffnung (14), einer reinluftseitigen Austrittsöffnung (16) und einer verschließbaren Wartungsöffnung (18);
- ein erstes Filterelement (24) und ein zweites Filterelement (26), die zwischen der Eintrittsöffnung (14) und der Austrittsöffnung (16) innerhalb des Filtergehäuses (12) angeordnet sind;
- einen Montagerahmen (32), in dem das erste Filterelement (24) aufgenommen ist; wobei die Filterelemente (24, 26) in zumindest einem Betriebszustand des Luftfilters (10) seriell durchströmbar sind;
wobei der Montagerahmen (32) in einer Fügerichtung (36) durch die Wartungsöffnung (18) aus dem Filtergehäuse (12) entnehmbar und in der Fügerichtung (36) in das Filtergehäuse (12) einsetzbar ist;
wobei der Montagerahmen (32) einen Spannkeil (40) und das zweite Filterelement (26) einen Keilanschlag (50) aufweist;
wobei der Spannkeil (40) des Montagerahmens (32) durch Einsetzen an dem Keilanschlag (50) des zweiten Filterelements (26) zur Anlage kommt und das zweite Filterelement (26) dadurch in einer Spannrichtung (60) quer zu der Fügerichtung (36) mit dem Filtergehäuse (12) verspannt.

2. Luftfilter (10) nach Anspruch 1, wobei der Montagerahmen (32) an einer dem Spannkeil (40) abgewandten Seite einen Keilgegenanschlag (56) aufweist, der sich in einem Montagezustand an dem Filtergehäuse (12) abstützt, sodass eine über den Spannkeil (40) auf das zweite Filterelement (26) übertragene Spannkraft in das Filtergehäuse (12) ableitbar ist.

3. Luftfilter (10) nach Anspruch 1 oder 2, wobei der Spannkeil (40) wenigstens zwei Spannvorsprünge (48) mit einer unterschiedlichen Vorsprungshöhe (78) in Spannrichtung (60) aufweist.

4. Luftfilter (10) nach Anspruch 3, wobei die Vorsprungshöhe (78) der Spannvorsprünge (48) in Fügerichtung (36) abnimmt und der Keilanschlag (50) in Fügerichtung (36) gestufte Abschnitte aufweist, an denen jeweils ein Spannvorsprung (48) anliegt.

5. Luftfilter (10) nach einem der vorhergehenden Ansprüche, wobei der Spannkeil (40) zumindest zwei Keilwangen (42, 44) aufweist, wobei insbesondere die Keilwangen (42, 44) an gegenüberliegenden Seiten des Montagerahmens (32) angeordnet sind.

6. Luftfilter (10) nach Anspruch 5, wobei der Keilanschlag (50) zwei örtlich beabstandete Teilanschläge (54) aufweist, wobei insbesondere die Teilanschläge (54) an gegenüberliegenden Seiten des zweiten Filterelements (26) angeordnet sind.

7. Luftfilter (10) nach einem der vorhergehenden Ansprüche, wobei der Spannkeil (40) in Spannrichtung (60) über den Montagerahmen (32) hervorsteht.

8. Luftfilter (10) nach Anspruch 7, wobei zumindest eine Keilwange (42, 44) des Spannkeils (40) fluiddurchlässig ausgebildet ist.

9. Luftfilter (10) nach Anspruch 6 bis 8, wobei die Keilwangen (42, 44) in Spannrichtung (60) unterschiedlich weit über den Montagerahmen (32) hervorstehen, wobei insbesondere die fluiddurchlässige Keilwange (44) weiter über den Montagerahmen (32) übersteht als eine andere Keilwange (42).

10. Luftfilter (10) nach einem der vorhergehenden Ansprüche, wobei das erste Filterelement (24) austauschbar an dem Montagerahmen (32) angeordnet ist.

11. Luftfilter (10) nach einem der vorhergehenden Ansprüche, wobei der Montagerahmen (32) einen Rahmenabschnitt aufweist, der das erste Filterelement (24) randseitig zumindest teilweise umlaufend umgibt, wobei insbesondere der Spannkeil (40) an dem Rahmenabschnitt ausgebildet ist.

12. Luftfilter (10) nach einem der vorhergehenden Ansprüche, wobei das erste Filterelement (24) und das zweite Filterelement (26) in dem Montagezustand parallel zueinander oder unter einem Winkel zueinander, insbesondere unter einem vorbestimmten Winkel bezüglich der Fügerichtung (36) gedreht, in dem Filtergehäuse (12) angeordnet sind.

13. Luftfilter (10) nach Anspruch 12, wobei der Montagerahmen (32) in dem Montagezustand unter einem Winkel zu dem zweiten Filterelement (26) in dem Filtergehäuse (12), insbesondere unter einem vorbestimmten Winkel bezüglicher der Fügerichtung (36) gedreht, angeordnet ist.

14. Luftfilter (10) nach einem der vorhergehenden Ansprüche, wobei die Wartungsöffnung (18) durch eine Haube (20) öffenbar und verschließbar ist, wobei die Haube (20) an dem Montagerahmen (32) angeordnet ist.

15. Luftfilter (10) nach einem der vorhergehenden Ansprüche, wobei das zweite Filterelement (26) mittels eines Scharniers (68) innerhalb des Filtergehäuses (12) in eine Befestigungsstellung gedreht und mittels einer Sicherung (76), insbesondere in Form eines Schnapphakens, in der Befestigungsstellung vorbefestigbar ist.

16. Luftfilter (10) nach einem der vorhergehenden Ansprüche, aufweisend ein schaltbares Bypass-Schaltelement (84), das stromabwärts eines in einer Durchströmungsrichtung stromaufwärts angeordneten Filterelements (24) vorliegt, wobei das Bypass-Schaltelement (84) dazu ausgebildet ist, in einem ersten Betriebszustand eine serielle Durchströmung beider Filterelemente (24, 26) zu bewirken und in einem zweiten Betriebszustand eine zumindest teilweise Umgehung des stromabwärts angeordneten Filterelements (26) zu bewirken.

17. Luftfilter (10) nach Anspruch 16 in Verbindung mit Anspruch 8, wobei die zumindest eine fluiddurchlässig ausgebildete Keilwange (44) des Montagerahmens (32) einen Bypass-Strömungspfad zwischen den beiden Filterelementen (24, 26) bereitstellt.

18. Luftfilter (10) nach Anspruch 16 oder 17, aufweisend eine weitere Austrittsöffnung (79), wobei die weitere Austrittsöffnung (79) an der Abströmseite (66) des ersten Filterelements (24) angeordnet ist, und wobei die weitere Austrittsöffnung (79) durch das Bypass-Schaltelement (84) öffenbar und schließbar ist.

19. Luftfilter (10) nach Anspruch 18, aufweisend eine reinluftseitige Strömungsführung, insbesondere in Form einer Luftsammelleiste (80), die die Austrittsöffnungen (16, 79) abströmseitig fluidisch verbindet.

## Claims

1. An air filter (10) featuring
- a filter housing (12) having an inlet port (14) on the raw air side, an outlet port (16) on the clean air side and a closable maintenance opening (18);
- a first filter element (24) and a second filter element (26) disposed between the inlet port (14) and the outlet port (16) inside the filter housing (12);
- a mounting frame (32) in which the first filter element (24) is accommodated;
wherein the filter elements (24, 26) can be flowed through in series in at least one operating state of the air filter (10);
wherein the mounting frame (32) is extractable from the filter housing (12) in a joining direction (36) through the maintenance opening (18) and insertable in the joining direction (36) into the filter housing (12);
wherein the mounting frame (32) features a clamping wedge (40) and the second filter element (26) features a wedge stop (50);
wherein the clamping wedge (40) of the mounting frame (32) comes to rest by insertion at the wedge stop (50) of the second filter element (26) and the second filter element (26) is thereby tensioned in a clamping direction (60) transverse to the joining direction (36) with the filter housing (12).

2. The air filter (10) according to claim 1, wherein the mounting frame (32) features a wedge counter-stop (56) on a side facing away from the clamping wedge (40), said wedge counter-stop resting on the filter housing (12) in an assembled state so that a clamping force transmitted through the clamping wedge (40) to the second filter element (26) can be diverted into the filter housing (12).

3. The air filter (10) according to claim 1 or 2, wherein the clamping wedge (40) features at least two clamping projections (48) having a different projection height (78) in the clamping direction (60).

4. The air filter (10) according to claim 3, wherein the projection height (78) of the clamping projections (48) decreases in the joining direction (36) and the wedge stop (50) features sections stepped in the joining direction (36), against which a clamping projection (48) rests respectively.

5. The air filter (10) according to one of the preceding claims, wherein the clamping wedge (40) features at least two wedge cheeks (42, 44), wherein in particular the wedge cheeks (42, 44) are disposed on mutually opposing sides of the mounting frame (32).

6. The air filter (10) according to claim 5, wherein the wedge stop (50) features two locally spaced apart partial stops (54), wherein in particular the partial stops (54) are disposed on mutually opposing sides of the second filter element (26).

7. The air filter (10) according to one of the preceding claims, wherein the clamping wedge (40) projects beyond the mounting frame (32) in the clamping direction (60).

8. The air filter (10) according to claim 7, wherein at least one wedge cheek (42, 44) of the clamping wedge (40) is designed to be fluid-permeable.

9. The air filter (10) according to claim 6 to 8, wherein the wedge cheeks (42, 44) project differently far beyond the mounting frame (32) in the clamping direction (60), wherein in particular the fluid-permeable wedge cheek (44) projects further beyond the mounting frame (32) than another wedge cheek (42).

10. The air filter (10) according to one of the preceding claims, wherein the first filter element (24) is replaceably disposed on the mounting frame (32).

11. The air filter (10) according to one of the preceding claims, wherein the mounting frame (32) features a frame section which at least partially surrounds the first filter element (24) on the edge in a circumferential manner, wherein in particular the clamping wedge (40) is realized at the frame section.

12. The air filter (10) according to one of the preceding claims, wherein the first filter element (24) and the second filter element (26), in the assembled state, are disposed in the filter housing (12) parallel to each other or at an angle to each other, in particular rotated at a predetermined angle with respect to the joining direction (36).

13. The air filter (10) according to claim 12, wherein the mounting frame (32), in the assembled state, is disposed at an angle with regard to the second filter element (26) in the filter housing (12), in particular rotated at a predetermined angle with respect to the joining direction (36).

14. The air filter (10) according to one of the preceding claims, wherein the maintenance opening (18) is openable and closable by a hood (20), wherein the hood (20) is disposed on the mounting frame (32).

15. The air filter (10) according to one of the preceding claims, wherein the second filter element (26) is rotated into a fastening position using a hinge (68) inside the filter housing (12) and can be pre-fastened in the fastening position using a safety device (76), in particular in the shape of a snap hook.

16. The air filter (10) according to one of the preceding claims, comprising a switchable bypass switching element (84) located downstream of a filter element (24) disposed upstream in a through-flow direction, wherein the bypass switching element (84) is designed to cause, in a first operating state, a serial throughflow of both filter elements (24, 26) and to achieve, in a second operating state, an at least partial bypassing of the filter element (26) disposed downstream.

17. The air filter (10) according to claim 16 in conjunction with claim 8, wherein the at least one wedge cheek (44) of the mounting frame (32) designed to be fluid-permeable provides a bypass flow path between the two filter elements (24, 26).

18. The air filter (10) according to claim 16 or 17, featuring a further outlet port (79), wherein the further outlet port (79) is disposed on the outflow side (66) of the first filter element (24), and wherein the further outlet port (79) can be opened and closed by the bypass switching element (84).

19. The air filter (10) according to claim 18, featuring a flow guidance on the clean air side, in particular in the shape of an air collecting strip (80) that fluidically connects the outlet ports (16, 79) on the outflow side.

## Revendications

1. Filtre à air (10) présentant
- un boîtier de filtre (12) ayant une ouverture d'afflux (14) du côté air brut, une ouverture de sortie (16) du côté air pur et une ouverture de maintenance obturable (18);
- un premier élément filtrant (24) et un second élément filtrant (26) disposés entre l'ouverture d'afflux (14) et l'ouverture de sortie (16) à l'intérieur du boîtier de filtre (12);
- un cadre de montage (32) dans lequel est logé le premier élément filtrant (24);
les éléments filtrants (24, 26) pouvant être traversés en série dans au moins un état opérationnel du filtre à air(10);
le cadre de montage (32) pouvant être extrait du boîtier de filtre (12) dans une direction de jointure (36) à travers l'ouverture de maintenance (18) et inséré dans le boîtier de filtre (12) dans la direction de jointure (36);
le cadre de montage (32) présentant une clavette de serrage (40) et le second élément filtrant (26) présentant une butée de clavette (50);
la clavette de serrage (40) du cadre de montage (32) venant en appui par insertion sur la butée de clavette (50) du second élément filtrant (26) et le second élément filtrant (26) étant ainsi serré avec le boîtier de filtre (12) dans une direction de serrage (60) transversale à la direction de jointure (36).

2. Filtre à air (10) selon la revendication 1, le cadre de montage (32) présentant, sur un côté opposé à la clavette de serrage (40), une contre-butée de clavette (56) qui s'appuie, à l'état monté sur le boîtier de filtre (12) dans un état de montage, de sorte qu'une force de serrage transmise au second élément filtrant (26) par l'intermédiaire de la clavette de serrage (40) peut être évacuée dans le boîtier de filtre (12).

3. Filtre à air (10) selon la revendication 1 ou 2, la clavette de serrage (40) présentant au moins deux saillies de serrage (48) ayant une hauteur de saillie (78) différente dans la direction de serrage (60).

4. Filtre à air (10) selon la revendication 3, la hauteur de saillie (78) des saillies de serrage (48) décroissant en direction de jointure (36) et la butée de clavette (50) présentant en direction de jointure (36) des sections étagées contre lesquelles repose respectivement une saillie de serrage (48).

5. Filtre à air (10) selon l'une quelconque des revendications précédentes, la clavette de serrage (40) présentant au moins deux joues de clavette (42, 44), notamment les joues de clavette (42, 44) étant disposées sur des côtés opposés du cadre de montage (32).

6. Filtre à air (10) selon la revendication 5, la butée de clavette (50) présentant deux butées partielles (54) localement espacées, notamment les butées partielles (54) étant disposées sur des côtés opposés du second élément filtrant (26).

7. Filtre à air (10) selon l'une quelconque des revendications précédentes, la clavette de serrage (40) faisant saillie dans la direction de serrage (60) en dépassant le cadre de montage (32).

8. Filtre à air (10) selon la revendication 7, au moins une joue de clavette (42, 44) de la clavette de serrage (40) étant réalisée perméable aux fluides.

9. Filtre à air (10) selon la revendication 6 à 8, les joues de clavette (42, 44) dépassant à des distances différentes du cadre de montage (32) dans la direction de serrage (60), la joue de clavette (44) perméable aux fluides dépassant notamment davantage du cadre de montage (32) qu'une autre joue de clavette (42).

10. Filtre à air (10) selon l'une quelconque des revendications précédentes, le premier élément filtrant (24) étant disposé de manière interchangeable sur le cadre de montage (32).

11. Filtre à air (10) selon l'une quelconque des revendications précédentes, le cadre de montage (32) présentant une section de cadre entourant au moins partiellement de manière circonférentielle le premier élément filtrant (24) sur le bord, la clavette de serrage (40) étant notamment réalisée sur la section de cadre.

12. Filtre à air (10) selon l'une quelconque des revendications précédentes, le premier élément filtrant (24) et le second élément filtrant (26) étant disposés dans le boîtier de filtre (12), à l'état monté, parallèlement l'un à l'autre ou selon un angle l'un à l'autre, notamment tourné selon un angle prédéterminé par rapport à la direction de jointure (36).

13. Filtre à air (10) selon la revendication 12, le cadre de montage (32) étant disposé, à l'état monté, selon un angle par rapport au second élément filtrant (26) dans le boîtier de filtre (12), notamment tourné selon un angle prédéterminé par rapport à la direction de jointure (36).

14. Filtre à air (10) selon l'une quelconque des revendications précédentes, l'ouverture de maintenance (18) pouvant être ouverte et fermée par un capot (20), le capot (20) étant disposé sur le cadre de montage (32).

15. Filtre à air (10) selon l'une quelconque des revendications précédentes, le second élément filtrant (26) étant tourné dans une position de fixation au moyen d'une charnière (68) à l'intérieur du boîtier de filtre (12) et pouvant être fixé préalablement dans la position de fixation au moyen d'un dispositif de sécurité (76), notamment sous la forme d'un crochet d'encliquetage.

16. Filtre à air (10) selon l'une quelconque des revendications précédentes, présentant un élément de commutation de dérivation commutable (84) qui se trouve en aval d'un élément filtrant (24) disposé en amont dans un sens d'écoulement, l'élément de commutation de dérivation (84) étant réalisé de manière à provoquer, dans un premier état opérationnel, un écoulement en série des deux éléments filtrants (24, 26) et, dans un second état opérationnel, un contournement au moins partiel de l'élément filtrant (26) disposé en aval.

17. Filtre à air (10) selon la revendication 16 en combinaison avec la revendication 8, la joue de clavette (44), au moins au nombre d'une, du cadre de montage (32), réalisée de manière à être perméable aux fluides, fournit un trajet d'écoulement de dérivation entre les deux éléments filtrants (24, 26).

18. Filtre à air (10) selon la revendication 16 ou 17, présentant une autre ouverture de sortie (79), l'autre ouverture de sortie (79) étant disposée sur le côté aval (66) du premier élément filtrant (24), et l'autre ouverture de sortie (79) pouvant être ouverte et fermée par l'élément de commutation de dérivation (84).

19. Filtre à air (10) selon la revendication 18, présentant un guidage d'écoulement du côté de l'air pur, notamment sous la forme d'une barre collectrice d'air (80), qui relie fluidiquement les ouvertures de sortie (16, 79) du côté aval.
